# EUROPEAN PATENT APPLICATION

(11) **EP 4 716 307 A1**
(43) Date of publication of application: **25.03.2026**
(21) Application number: 23955215.1
(22) Date of filing: 13.10.2023
(51) Int. Cl.: H04W 48/08

(54) **INFORMATION ACQUISITION METHOD AND DEVICE**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: Grassi, Stefano
(86) International application number: PCT/CN2023/124609
(87) International publication number: WO 2025/076839

(57) **Abstract**

The present application relates to an information acquisition method and a device. The method comprises: a first network element receives an analysis request, wherein the analysis request comprises a first parameter, and the first parameter is used for requesting analysis of network energy consumption; and the first network element acquires energy consumption information on the basis of the analysis request. According to the embodiments of the present application, the energy consumption information can be acquired on the basis of the received analysis request, so that energy consumption data in a communication network is collected.

## Description

### TECHNICAL FIELD

The present disclosure relates to the field of communication, and more particular to a method and device for obtaining information.

### BACKGROUND

The Network Data Analysis Function (NWDAF) in the 5th Generation Mobile Communication Technology (5G) network can collect data from various network elements, network management systems, etc. in the core network, and perform big data statistics, analytics or intelligent data analytics by using the collected data to obtain analytics or prediction data at the network side, and thus assist various network elements in controlling UE access more effectively based on the data analytics result. At present, the NWDAF is unable to collect energy consumption information.

### SUMMARY

The embodiments of the present disclosure provide a method and device for information acquisition that can collect energy consumption data in a communication network.

An embodiment of the present disclosure provides a method for information acquisition, which includes operations as follows.

A first network element receives an analytics request. The analytics request includes a first parameter for requesting analytics for network energy consumption.

The first network element acquires energy consumption information based on the analytics request.

An embodiment of the present disclosure provides a method for information acquisition, which includes operations as follows.

A third network element or a user equipment (UE) transmits an analytics request to a first network element. The analytics request includes a first parameter for requesting analytics for network energy consumption.

An embodiment of the present disclosure provides a method for information acquisition, which includes an operation as follows.

A user equipment (UE) transmits energy consumption information. The energy consumption information includes energy consumption information of the UE.

An embodiment of the present disclosure provides a method for information acquisition, which includes an operation as follows.

An access device sends energy consumption information. The energy consumption information includes energy consumption information of the access device.

An embodiment of the present disclosure provides a method for information acquisition, which includes an operation as follows.

A fourth network element transmits energy consumption information. The energy consumption information includes at least one of energy consumption analytics information based on network element granularity and energy consumption analytics information based on slice granularity.

An embodiment of the present disclosure provides a method for information acquisition, which includes an operation as follows.

A second network element transmits energy consumption information. The energy consumption information includes energy consumption information of the second network element.

An embodiment of the present disclosure provides a first network element, which includes a first transceiver unit and a first processing unit.

The first transceiver unit is configured to receive an analytics request. The analytics request includes a first parameter for requesting analytics for network energy consumption.

The first processing unit is configured to obtain energy consumption information based on the analytics request.

An embodiment of the present disclosure provides a third network element or terminal device, which includes a second transceiver unit.

The second transceiver unit is configured to transmit an analytics request to a first network element. The analytics request includes a first parameter for requesting analytics for network energy consumption.

An embodiment of the present disclosure provides a terminal device, which includes a third transceiver unit.

The third transceiver unit is configured to transmit energy consumption information, and the energy consumption information includes energy consumption information of the terminal device.

An embodiment of the present disclosure provides an access device, which includes a fourth transceiver unit.

The fourth transceiver unit is configured to transmit energy consumption information, and the energy consumption information includes energy consumption information of the access device.

An embodiment of the present disclosure provides a fourth network element, which includes a fifth transceiver unit.

The fifth transceiver unit is configured to transmit energy consumption information, and the energy consumption information includes at least one of energy consumption analytics information based on network element granularity and energy consumption analytics information based on slice granularity.

An embodiment of the present disclosure provides a second network element, which includes a sixth transceiver unit.

The sixth transceiver unit is configured to transmit energy consumption information, and the energy consumption information includes energy consumption information of the second network element.

An embodiment of the present disclosure provides a network element including a processor and a memory. The memory is used to store a computer program, and the processor is used to invoke and run the computer program stored in the memory to enable the network element to perform the method for information acquisition described above.

An embodiment of the present disclosure provides an access device including a processor and a memory. The memory is used to store a computer program, and the processor is used to invoke and run the computer program stored in the memory to enable the access device to perform the method for information acquisition described above.

An embodiment of the present disclosure provides a terminal device including a processor and a memory. The memory is used to store a computer program, and the processor is used to invoke and run the computer program stored in the memory to enable the access device to perform the method for information acquisition described above.

An embodiment of the present disclosure provides a chip for implementing the method for information acquisition described above.

Specifically, the chip includes a processor for invoking and running a computer program from a memory to enable the device installed with the chip to execute the above method for information acquisition.

An embodiment of the present disclosure provides a computer-readable storage medium for storing a computer program, which, when executed by a device, causes the device to perform the method for information acquisition described above.

An embodiment of the present disclosure provides a computer program product including computer program instructions that enable a computer to execute the method for information acquisition described above.

An embodiment of the present disclosure provides a computer program that, when run on a computer, causes the computer to execute the method for information acquisition described above.

The embodiments of the present disclosure can obtain energy consumption information based on the received analytics request, thereby acquiring energy consumption data in the communication network.

### BRIEF DESCRIPTION OF THE DRAWINGS

FIG. 1 is a schematic diagram of an application scenario according to an embodiment of the present disclosure.
FIG. 2A is a schematic diagram of data collection of the NWDAF.
FIG. 2B is another schematic diagram of data collection of the NWDAF.
FIG. 3 is a schematic flowchart of a method 300 for information acquisition according to an embodiment of the present disclosure.
FIG. 4 is a schematic flowchart of a method 400 for information acquisition according to an embodiment of the present disclosure.
FIG. 5 is a schematic flowchart of a method 500 for information acquisition according to an embodiment of the present disclosure.
FIG. 6 is a schematic flowchart of a method 600 for information acquisition according to an embodiment of the present disclosure.
FIG. 7 is a schematic flowchart of a method 700 for information acquisition according to an embodiment of the present disclosure.
FIG. 8 is a schematic flowchart of a method 800 for information acquisition according to an embodiment of the present disclosure.
FIG. 9A is a flowchart of an implementation method 1 of a first embodiment of the present disclosure.
FIG. 9B is a flowchart of an implementation method 2 of a first embodiment of the present disclosure.
FIG. 10 is a flowchart of an implementation of a third embodiment of the present disclosure.
FIG. 11 is a schematic block diagram of a first network element 1100 according to an embodiment of the present disclosure.
FIG. 12 is a schematic block diagram of a third network element or a terminal device 1200 according to an embodiment of the present disclosure.
FIG. 13 is a schematic block diagram of a third network element or a terminal device 1300 according to another embodiment of the present disclosure.
FIG. 14 is a schematic block diagram of a terminal device 1400 according to an embodiment of the present disclosure.
FIG. 15 is a schematic block diagram of an access device 1500 according to an embodiment of the present disclosure.
FIG. 16 is a schematic block diagram of a fourth network element 1600 according to an embodiment of the present disclosure.
FIG. 17 is a schematic block diagram of a second network element 1700 according to an embodiment of the present disclosure.
FIG. 18 is a schematic block diagram of a communication device 1800 according to an embodiment of the present disclosure.
FIG. 19 is a schematic block diagram of a chip 1900 according to an embodiment of the present disclosure.

### DETAILED DESCRIPTION

The technical solutions of the embodiments of the present disclosure are described with conjunction to the accompanying drawings of the embodiments of the present disclosure.

The technical solutions of the embodiments of the present disclosure may be applied to various communication systems, for example, the Global System for Mobile Communications (GSM) system, the Code Division Multiple Access (CDMA) system, the Wideband Code Division Multiple Access (WCDMA) system, the General Packet Radio Service (GPRS), the Long Term Evolution (LTE) system, the Advanced Long Term Evolution (LTE-A), the New Radio (NR) system, the evolved system of NR, the LTE-based access to unlicensed spectrum (LTE-U), the NR-based access to unlicensed spectrum ( NR-U), the Non-Terrestrial Network (NTN), the Universal Mobile Telecommunication System (UMTS), the Wireless Local Area Network (WLAN), the Wireless Fidelity (WiFi), the 5th-Generation (5G) system, or other communication systems.

The traditional communication system typically supports a limited number of connections and is easily be implemented. However, with the advancement of communication technology, the mobile communication system not only supports the traditional communication but also supports Device-to-Device (D2D) communication, Machine to Machine (M2M) communication, Machine Type Communication (MTC), Vehicle to Vehicle (V2V) communication, or Vehicle to Everything (V2X) communication. The embodiments of the present disclosure may also be applied to these communication systems.

In an embodiment, the communication system of the present disclosure may be applied to a Carrier Aggregation (CA) scenario, a Dual Connectivity (DC) scenario, or a Standalone (SA) network deployment scenario.

In an embodiment, the communication system of the present disclosure may be applied to the unlicensed spectrum, and the unlicensed spectrum may also be the shared spectrum. Alternatively, the communication system of the present disclosure may be applied to the licensed spectrum, and the licensed spectrum may also be the non-shared spectrum.

Various embodiments of the present disclosure are described in conjunction with the network device and the terminal device. The terminal equipment may also be referred to as User Equipment (UE), an access terminal, a user unit, a user station, a mobile station, a mobile terminal, a remote station, a remote terminal, a mobile device, a user terminal, a terminal, a wireless communication device, a user agent, or a user apparatus.

The terminal devices may be a station (STAION, ST) in the WLAN, and may also be a cellular phone, a cordless phone, a Session Initiation Protocol (SIP) phone, a Wireless Local Loop (WLL) station, a Personal Digital Assistant (PDA) device, a handheld device with wireless communication capabilities, a computing devices, or other processing device connected to a wireless modem, an in-vehicle device, a wearable devices a terminal device in the next-generation communication system such as the NR network, or a terminal device in the future evolved Public Land Mobile Network (PLMN).

In embodiments of the present disclosure, the terminal device may be deployed on land, including indoors or outdoors, for example, a handheld terminal device, a wearable terminal device or a vehicle-mounted terminal device. The terminal device may also be deployed on the water surface (e.g., a ship), or may be deployed in the air (e.g., on an aircraft, a balloon, and a satellite).

In embodiments of the present disclosure, the terminal device may be a mobile phone, a tablet (Pad), a computer having wireless transceiver capabilities, a virtual reality (VR) terminal device, an augmented reality (AR) terminal device, a wireless terminal device in industrial control, a wireless terminal device in self-driving applications, a wireless terminal device in remote medical, a wireless terminal device in the smart grid, a wireless terminal device in transportation safety, a wireless terminal device in smart cities, or a wireless terminal device in smart homes.

By way of example and not limitation, the terminal device in the embodiments of the present disclosure may also be a wearable device. Wearable devices, also known as wearable smart devices, are a general term for wearable devices developed by intelligently designing the everyday wearables using the wearable technology, such as glasses, gloves, watches, clothing and shoes. The wearable devices are either directly worn on the body or integrated into the user's clothing or accessories as portable devices. The wearable devices are not merely hardware devices, and can achieve powerful functionality through software support, data interaction and cloud connectivity. The generalized wearable smart devices include function entire and larger-sized devices (e.g., smartwatches or smart glasses) capable of implementing the complete or partial functions without smartphones; and specialized devices (e.g., various smart bracelets or smart jewelry for monitoring vital signs) for specific applications that used in conjunction with other devices like smartphones.

In the embodiments of the present disclosure, the network device may be a device used for communication with the mobile device. The network device may include an access points (AP) in the WLAN, a base transceiver station (BTS) in the GSM or CDMA, a node B (NB) in the WCDMA, or an evolved node B (eNB or eNodeB) in LTE, a relay station or an access point, an in-vehicle device, a wearable device, a network device (gNB) in an NR network, a network device in a future evolved PLMN network, or a network device in an NTN network, or the like.

By way of example and not limitation, in embodiments of the present disclosure, the network device may have mobility characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Alternatively, the network device may also be a base station deployed at for example land or water areas.

In embodiments of the present disclosure, the network device may provide services to a cell. The terminal device communicates with the network device using transmission resources (e.g., frequency domain resources, or spectrum resources) utilized by the cell. The cell may correspond to the cell corresponding to the network device (e.g., a base station). The cell may belong to a macro base station or to a base station corresponding to a small cell. Here, the small cell may include a metro cell, a micro cell, a pico cell, and a femto cell. The small cells have characteristics of limited coverage areas and low transmission power, and are suitable for providing high-speed data transmission services.

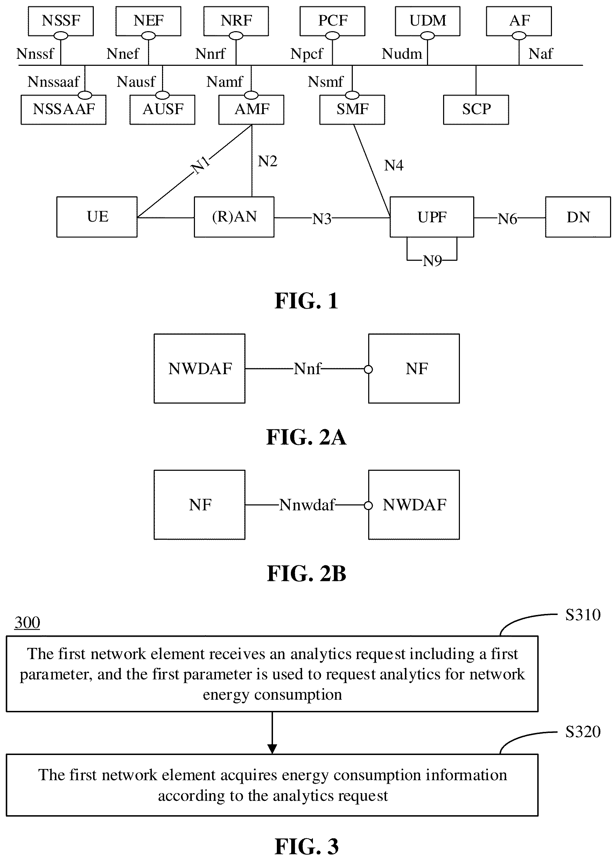

It should be understood that in the network/system in the embodiments of the present disclosure, the devices having communication capabilities may be referred to as communication devices. Taking the communication system illustrated in FIG. 1 as an example, the communication device may include a network device and a terminal device having communication capabilities. The network device and the terminal device may be specific devices described in the embodiments of the present disclosure, which are not described repeatedly here. The communication device may also include other devices within the communication system, such as a network controller, a mobile management entity, and other network entities, which is not limited in the embodiments of the present disclosure.

It should be understood that the terms "system" and 'network' are often used interchangeably herein. The term "and/or" herein merely describes an associative relationship between objects, indicating three possible relationships. For example, "A and/or B" may represent: An existing alone, A and B existing together, or B existing alone. Additionally, the character "/" generally indicates an "or" relationship between the associated objects.

It should be understood that the term "indicates" as used in the embodiments of the present disclosure may refer to direct indication, indirect indication, or an associative relationship. For example, A indicates B may mean that A directly indicates B, such as B being obtainable through A; A indirectly indicates B, such as A indicating C and B being obtainable through C; or A and B have an associative relationship.

In the description of the embodiments of the present disclosure, the term "corresponding" may indicate a direct or indirect correspondence between two elements, an associative relationship between the two elements, or a relationship such as indicating and being indicated, or configuring and being configured.

To facilitate understanding of the technical solutions in the embodiments of the present disclosure, the relevant technologies of the embodiments of the present disclosure are described below. These relevant technologies may be as optional alternatives combined arbitrarily with the technical solutions of the embodiments of present disclosure, and all fall within the scope of protection of the embodiments of the present disclosure.
I. Fifth-Generation Mobile Communication Technology (5G) Network Architecture is described below.

A key feature of the 5G network architecture is a service-orientated architecture. That is, the core network element (the service provider) may provide specific services which may be available to other network elements (consumers) through defined Application Programming Interfaces (APIs).

As shown in FIG. 1 below, which is a system architecture diagram in which a mobile terminal accesses a mobile network. The UE and the base station perform access stratum (AS) connection to exchange AS messages and perform wireless data transmission. The UE and the Authentication Management Function (AMF) perform the Non-Access Stratum (NAS) connection to exchange NAS messages. The AMF is used for mobility management for the UE, while the Session Management Function (SMF) is used for session management for the UE. In addition to the mobility management, the AMF also forwards a session management message between the UE and the SMF. The Policy Control Function (PCF) is used to formulate policies related to UE mobility management, session management and billing. The User Plane Function (UPF) connects to the base station and the external data network for data transmission.

II. The Network Data Analytics Function (NWDAF) is introduced below.

The 5G network introduces the Network Data Analytics Function (NWDAF) within the core network. The NWDAF collects data from various network elements and network management systems in the core network to perform big data statistics, analytics, or intelligent data processing, to obtain analytics or prediction data at the network side, and thus assist the network elements in more effectively controlling UE access based on the data analytics results.

Specifically, the NWDAF network element collects data from other network elements for big data analytics. In view of this, an interface between the NWDAF and other Network Functions (NFs) is defined, including the NF requesting an analytics result from the NWDAF (identified by an Analytic ID) and the NWDAF sending an analytics result to the NF.

Figs. 2A and 2B are schematic diagrams of data collection of the NWDAF. The NWDAF can collect data from various NFs, perform big data analytics on the collected data, and send the analytics results to the respective NFs.

The analytics results that the NWDAF can provide are partially listed in Table 1 below:

**Table 1**

| Analytics Information | Request Description | Response Description |
|---|---|---|
| Network Performance Information | Analytics ID: Network Performance | Statistics and predictions for network load information for areas of interest. Additionally, statistics and predictions of the number of UEs within the areas can also be performed. |
| UE Mobility Information | Analytics ID: UE Mobility | Statistics or prediction of UE mobility |
| User Data Congestion Information | Analytics ID: User Data Congestion | Statistics or predictions about user data congestion, including transmission for the user plane and/or transmission for the control plane. |
| QoS Sustainability | Analytics ID: QoS Sustainability | For statistics, the statistical information includes the location, time, and exceeded threshold when the QoS changes. |
| | | For predictions, the information about the potential location and time where and when the QoS may change, along with the thresholds that may be exceeded. |

III. Energy Efficiency Research is described below.

In the mobile communication network such as the 5G network and the sixth-generation mobile communication technology (6G) network, how to enhance energy efficiency is a critical consideration. Research of the energy efficiency primarily encompasses the following aspects: investigating the openness of network energy consumption information, developing strategy control based on network energy conservation, and enhancing 5GS to support network energy conservation.

Additionally, in the 5G networks, the Operation Administration and Maintenance (OAM) system can monitor the energy consumption of the network device, to know the energy consumption of various devices in the entire mobile network and performs network management level control. For example, certain network devices are turned off during the idle period, to reduce energy consumption and improve energy utilization efficiency. The current OAM system monitors network device level energy consumption and controls the network device, but is unable to distinguish user or service level energy consumption. The control granularity at the device level is coarse. For example, turning off the base station or the core network device affects all services of the UEs serviced by the base station or the core network and all services of all UE to be serviced by the base station or the core network, and thus affects user experience and reduces satisfaction of the user with the mobile communication network.

In existing networks, the network can provide communication guarantees meeting Quality of Service (QoS) requirements by allocating resources to services. However, how the network side can obtain energy consumption information from individual nodes, perform energy consumption analytics based on the energy consumption information, and determine to change the QoS policy based on the analytics result are not discussed currently.

The embodiments of the present disclosure propose a method for information acquisition capable of obtaining energy consumption information for network elements and/or terminals within the network. FIG. 3 is a schematic flowchart of a method 300 for information acquisition according to an embodiment of the present disclosure. This method may optionally be applied to the systems shown in FIG. 1, FIG. 2A or FIG. 2B, but is not limited thereto. The method includes at least some of the following operations S310 and S320.

At S310, a first network element receives an analytics request containing a first parameter. The first parameter requests analytics for network energy consumption.

At S320, the first network element acquires energy consumption information based on the analytics request.

In some embodiments, the first network element may include the NWDAF.

In some embodiments, the first network element may receive an analytics request from a subscriber, and the subscriber may include a PCF, an AF, a UE, etc. The subscriber sends an analytics request containing a first parameter to the first network element to request the first network element to perform analytics for network energy consumption. The first network element obtains energy consumption information from the UE side, a Radio Access Network (RAN) side, an OAM side, or a 5G Core (5GC) side based on the analytics request, for acquiring the energy consumption information. Subsequently, the first network element may perform energy consumption analytics using the acquired energy consumption information and send the energy consumption analytics result to the subscriber.

The results of energy consumption analytics may include an energy consumption statistical value and/or an energy consumption predicted value. The energy consumption statistical value includes historical energy consumption statistical information, while the energy consumption predicted value includes future energy consumption predicted information. Upon receiving the result of energy consumption analytics, the subscriber can make corresponding adjustments based on the result of energy consumption analytics. For example, the subscriber can turn off certain applications to reduce energy consumption, to decrease the volume of transmitted data, reduce the frequency of service usage, adjust the policy and so on, for reducing network energy consumption and achieving energy saving. The methods may be described in detail in subsequent examples for subscribers.

In an implementation, the first parameter includes at least one of the following:
an analytics ID, indicating network energy consumption;
UE information;
an application ID;
QoS information;
Slice information;
a data Network Name (DNN);
Session information; and
a target analytics time window.

Specifically, when the subscriber sends an analytics request to the first network element including the first parameter, and the analytics ID within the first parameter equals network energy consumption, this indicates that the subscriber requests the first network element to analyze network energy consumption.

The UE information may include a UE identifier or a UE list (for example, including multiple UE identifiers) to indicate the UE, the network energy consumption of which the subscriber wishes to subscribe to.

The application ID indicates an application that the subscriber requests the network to analyze network energy consumption generated by supporting the application. The application ID may include one or more identifiers.

The QoS information may include for example 5QI, for indicating the first network element to analyze network energy consumption generated by a QoS flow specified by the QoS information.

The slice information, such as S-NSSAI, indicates the first network element to analyze energy consumption of a service using the slice.

The DNN or the session information indicates the first network element to analyze energy consumption of a session using the slice and the DNN, or to analyze energy consumption of a session indicated by this session information.

The target analytics window indicates a future time, the prediction result at which the subscriber requests. The target analytics window may be relative time, absolute time, or a period of time.

By receiving the above first parameter, the first network element can specify which data the subscriber requests for analytics and acquire energy consumption data according to the requirements indicated by the first parameter. In some implementations, the operation that the first network element acquires energy consumption information includes the following operation.

The first network element acquires at least one of energy consumption information of the UE, energy consumption information of the access device, energy consumption analytics information based on network element granularity, energy consumption analytics information based on slice granularity, and energy consumption information of a second network element. The energy consumption information acquired by the first network element is used to perform network energy consumption analytics at the UE granularity, QoS flow granularity, session granularity, slice granularity, and network element granularity.

In some embodiments, the operation that the first network element acquires energy consumption information of the UE includes the following operation.

The first network element acquires or receives power consumption information of the UE from at least one of the AMF, the Application Function (AF) and the User Plane Function (UPF). For example, the power consumption information of the UE includes at least one of a change of electric quantity of the UE, power consumption of the UE, and power consumption generated when the UE runs one or more applications.

In some embodiments, the operation that the first network element acquires energy consumption information of the access device includes the following operation.

The first network element acquires energy consumption information of the access device from the access device or an operation, administration and maintenance (OAM) system. The energy consumption information of the access device includes, for example, at least one of energy consumption generated by the access device for meeting one or more quality of service (QoS) requirements, energy consumption generated by the access device for serving a UE, and energy consumption generated by the access device for serving a group of UEs.

In some embodiments, the operation that the first network element acquires energy consumption analytics information based on network element granularity or energy consumption analytics information based on slice granularity includes an operation as follows.

The first network element acquires energy consumption analytics information based on network element granularity or energy consumption analytics information based on slice granularity from the OAM. The energy consumption analytics information based on network element granularity or the energy consumption analytics information based on slice granularity includes for example at least one of a time or a scenario when an energy consumption issue occurs in the second network element, a level of the energy consumption issue occurring in the second network element, and recommendation information for the second network element to enter an energy-saving state.

Herein, the second network element may include an NF. For example, the energy consumption analytics information includes: for an NF, when or under what scenario an energy consumption issue occurs (e.g., the energy consumption issue occurs when which slice or slices used by the NF to provide service support), the level of the energy consumption issue, and recommendation for the NF to enter an energy-saving state. Herein, the recommendation for the NF to enter the energy-saving state may include when to enter the energy-saving state, etc.

In some embodiments, the operation that the first network element acquires energy consumption information of the second network element includes an operation as follows.

The first network element acquires energy consumption information of the second network element from the second network element. The energy consumption information of the second network element includes for example at least one of energy consumption generated by the second network element for supporting one or more QoS flows, energy consumption generated by the second network element for supporting one or more PDU sessions, and energy consumption generated by the second network element for serving one or more UEs.

Herein, the second network element may include an NF. For example, the NF may be the NF supporting a QoS flow or a PDU session.

With the above multiple manners, the first network element can acquire energy consumption information for performing energy consumption analytics. In some embodiments, after acquiring the energy consumption information, the first network element performs energy consumption analytics by using the energy consumption information. For example, the energy consumption analytics result includes at least one of the following:
a statistical and/or predicted value of total energy consumption consumed by supporting one or more levels of QoS requirements;
a statistical and/or predicted value of total energy consumption consumed by serving a UE or a group of UEs;
energy consumption added by raising the one or more levels of QoS requirements;
energy consumption decreased by lowering the QoS requirements in one or more levels;
a statistical and/or predicted value of energy consumed by one or more second network elements within a period of time;
a statistical and/or predicted value of energy consumed by the access device within a period of time;
a statistical and/or predicted value of energy consumed by one or more sessions within a period of time;
a predicted and/or predicted value of energy consumed by one or more slices within a period of time;
a predicted and/or predicted value of energy consumed by one or more applications within a period of time;
a predicted and/or predicted value of energy consumed by one or more QoS flows within a period of time;
a statistical and/or predicted value of a rate of energy consumption of one or more second network elements within a period of time;
a statistical and/or predicted value of a rate of energy consumption of the access device within a period of time;
a statistical and/or predicted value of a rate of energy consumption of one or more sessions within a period of time;
a predicted and/or predicted value of a rate of energy consumption of one or more slices within a period of time;
a predicted and/or predicted value of a rate of energy consumption of one or more applications within a period of time;
a predicted and/or predicted value of a rate of energy consumption of one or more QoS flows within a period of time; and
a valid time of the analytics result.

Herein, the valid time of the analytics result represents a valid time of the result of energy consumption analytics. This validity time may be absolute time, relative time, or a time interval.

In some embodiments, the first network element may receive the aforementioned analytics request from the third network element or the UE. The third network element or the UE is the subscriber to the energy consumption analytics. The third network element may include an AF or PCF. Accordingly, after performing the energy consumption analytics, the first network element transmits the energy consumption analytics result to the third network element or the UE (i.e., the subscriber).

When sending the analytics request to the first network element, the third network element or the UE may request either a one-time report or a continuous report from the first network element.

For example, the analytics request may include an analytics information request message, such as the Nnwdaf_AnalyticsInfo_Request message. The message is a one-time request. Upon receiving the analytics information request message, the first network element may acquire energy consumption information and perform energy consumption analytics, and subsequently send the energy consumption analytics result to the third network element or the UE (i.e., the subscriber).

For example, the request message includes an analytics subscription request message, such as the Nnwdaf_AnalyticsSubscription_Subscribe message. The request message is a multi-use request. After receiving the analytics information request message, the first network element may acquire energy consumption information and perform energy consumption analytics, and subsequently sends the energy consumption analytics result to the third network element or the UE (i.e., the subscriber). Subsequently, the first network element may periodically perform multiple energy consumption analytics and send the analytics result to the third network element or UE. Alternatively, the first network element may send the energy consumption analytics result to the third network element or UE when a predetermined condition is met. For example, upon acquiring new energy consumption information, the first network element performs energy consumption analytics using the new energy consumption information and sends an energy consumption analytics result to the third network element or UE. The new energy consumption information includes energy consumption information exceeding a first threshold. With the manner, the third network element or the UE can obtain real-time, updated energy consumption analytics result by a single request.

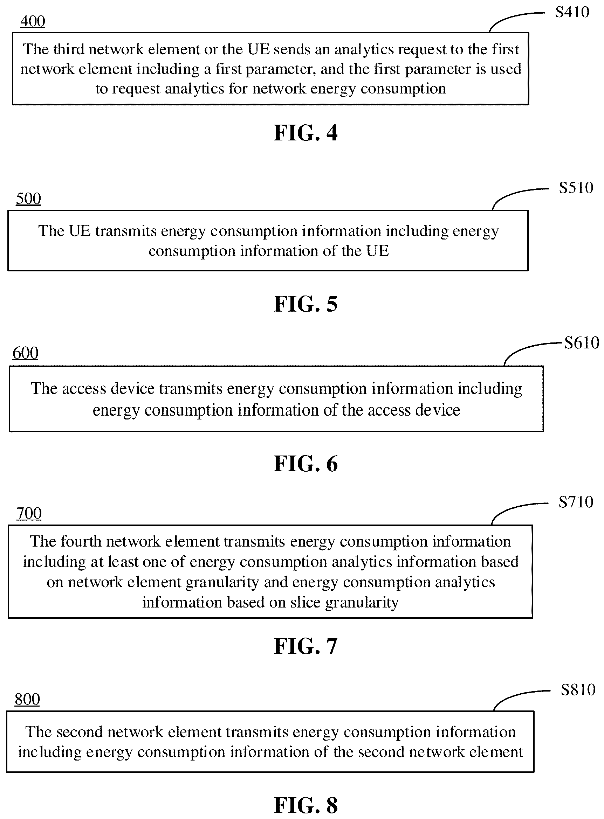

The present disclosure further proposes a method for information acquisition applicable to the third network element or the UE. The method can enable the third network element or the UE to request the first network element to perform network energy consumption analytics. FIG. 4 is a schematic flowchart of the method 400 for information acquisition according to an embodiment of the present disclosure. This method may optionally be applied to the systems shown in FIG. 1, FIG. 2A or FIG. 2B, but is not limited thereto. The method includes at least some of the following operation S410.

At S410, the third network element or the UE sends an analytics request to the first network element. This analytics request includes a first parameter used to request analytics for network energy consumption.

In some embodiments, the first network element may include an NWDAF.

In some embodiments, the third network element may include an AF, a PCF or the like. The third network element or the UE, as a subscriber to the energy consumption analytics, sends an analytics request to the first network element to request the first network element to perform network energy consumption analytics. After the first network element performs the network energy consumption analytics based on the analytics request, the first network element may feedback the energy consumption analytics result to the third network element or the UE, and the third network element or the UE receives the energy consumption analytics result.

In some embodiments, the first parameter includes at least one of the following:
an analytics identifier indicating network energy consumption;
UE information;
an application identifier;
QoS information;
slice information;
a DNN;
Session information; and
a target analytics time window.

In some embodiments, the method further includes an operation that the third network element or UE receives the energy consumption analytics result from the first network element, and the energy consumption analytics result is obtained based on analytics for energy consumption information.

In some embodiments, the energy consumption analytics result includes at least one of the following:
a statistical and/or predicted value of total energy consumption consumed by supporting one or more levels of QoS requirements;
a statistical and/or predicted value of total energy consumption consumed by serving one or a group of UEs;
energy consumption added by elevating the one or more levels of QoS requirements;
energy consumption decreased by lowering one or more levels of QoS requirements;
a statistical and/or predicted value of energy consumed by one or more second network elements within a period of time;
a statistical and/or predicted value of energy consumed by the access device within a period of time;
a statistical and/or predicted value of energy consumed by one or more sessions within a period of time;
a predicted and/or predicted value of energy consumed by one or more slices within a period of time;
a predicted and/or predicted value of energy consumed by one or more applications within a period of time;
a predicted and/or predicted value of energy consumed by one or more QoS flows within a period of time; and
a valid time of the analytics result.

Herein, the valid time of the analytics result represents a valid time of the result of energy consumption analytics. This validity time may be absolute time, relative time, or a time interval.

In some embodiments, the analytics request includes an analytics information request message. For example, the analytics information request message may be a message Nnwdaf_AnalyticsInfo_Request, and the message is a one-time request that may request the first network element to perform a single energy consumption message and return the message result to the third network element or UE.

In some embodiments, the message request includes an analytics subscription request message. For example, the analytics subscription request message may be a message Nnwdaf_AnalyticsSubscription_Subscribe. The request message is a multi-use request that may request the first network element to perform multiple energy consumption analytics and feedback the energy consumption analytics results to the third network element or UE. Specifically, the first network element may periodically perform energy consumption analytics, and send the energy consumption analytics results to the third network element or UE or send the energy consumption analytics results to the third network element or UE when a predetermined condition is met.

Upon receiving the energy consumption analytics result, the subscriber (e.g., UE, AF, PCF) can reduce energy consumption as appropriate. For instance, if the UE detects high energy consumption after receiving the energy consumption analytics result, the UE may turn down some applications to reduce power consumption. Similarly, if the AF detects high energy consumption after receiving the energy consumption analytics result, the AF may reduce the volume of transmitted data or the usage frequency of service to lower energy consumption.

If the PCF detects high energy consumption upon receiving the energy consumption analytics results, the PCF can use at least several different following manners to reduce energy consumption.

In the first manner, the third network element (e.g., PCF) updates an energy-saving policy based on at least one of the energy consumption analytics result, the Service Level Agreement (SLA) and local configuration.

The third network element transmits the updated energy-saving policy.

For example, the third network element (e.g., PCF) may send the updated energy-saving policy to the SMF, and the SMF updates QoS parameters, QoS profiles, QoS rules or the like for other network elements or the UE.

The SLA is pre-negotiated between the third and fourth network elements.

In some embodiments, the fourth network element includes an AF.

In some embodiments, the updated power saving policy includes at least one of a QoS parameter and a power saving indication.

In some embodiments, an operation that the third network element transmits the updated power saving policy includes an operation that the third network element transmits the updated power saving policy to the SMF.

In the second manner, in some embodiments, the method further includes an operation that the third network element updates a monitoring threshold and/or a monitoring time of measurement of the SMF. For example, the monitoring threshold is decreased and the monitoring time is increased. Therefore, the PCF can correctly perform threshold control (gating) or other policy when monitored usage exceeds the threshold. For instance, the PCF configures a measurement threshold for the SMF. When the SMF notifies the PCF of a result that the measurement threshold is exceeded, the PCF initiates the gating policy to block transmission of QoS flows, for avoiding the threshold from being exceeded.

In the third manner, the method in some implementations further includes an operation that in response to that the third network element determines, based on the energy consumption analytics result, that energy consumption of one or more Protocol Data Unit (PDU) sessions exceeds a predetermined threshold, or that energy consumption of one or more slices exceeds a predetermined threshold, the third network element sends a User Equipment Route Selection Policy (URSP) rule to the UE. The URSP rule instructs the UE to establish another PDU session or to route the traffic to a PDU session or slice energy consumption of which is below the predetermined threshold.

In the fourth manner, the method in some embodiments further includes an operation that the third network element determines, based on the energy consumption analytics result, to update Access Network Discovery and Selection Function (ANDSF) and transmits the updated ANDSF to the UE. Based on the ANDSF, the UE may preferentially select Wi-Fi access when energy consumption on the current 3GPP access mode is large.

Through the above processes, the third network element or the UE can subscribe to the energy consumption analytics result from the first network element. Furthermore, the energy consumption analytics result can be utilized to perform corresponding operations, thereby achieving a balance between the network energy consumption and the service.

Regarding the specific examples in which the third network element or the UE executes the method 400 in the embodiment, reference may be made to the relevant descriptions of the third network element or the UE in the aforementioned method 300. For the sake of brevity, repeated description is not provided here.

The present disclosure further proposes a method for information acquisition applicable to a UE. In the method, the UE transmits energy consumption information of the UE to provide the energy consumption information of the UE to the first network element. FIG. 5 illustrates a schematic flowchart of the method 500 for information acquisition according to one embodiment of the present disclosure. This method may optionally be applied to the systems depicted in FIG. 1, FIG.2A, or FIG.2B, but is not limited thereto. The method includes at least some of the following operation S510.

At operation S510, the UE transmits energy consumption information including energy consumption information of the UE.

In some embodiments, the operation that the UE transmits energy consumption information includes at least one of the following operations.

The UE transmits a NAS message containing the energy consumption information of the UE.

The UE transmits the energy consumption information of the UE via the application layer.

The UE transmits the energy consumption information of the UE via the user plane.

For example, the UE may transmit the energy consumption information to the AMF via a NAS message, and the AMF transmits the energy consumption information to the NWDAF.

For example, the UE may transmit the energy consumption information to the AF via the application layer, and the AF transmits the energy consumption information to the NWDAF.

For example, the UE may transmit the energy consumption information to the UPF via the User Plane (UP), and the UPF transmits the energy consumption information to the NWDAF.

In some embodiments, the energy consumption information of the UE includes at least one of a change of electric quantity of the UE, power consumption of the UE, and energy consumption generated when the UE runs one or more applications.

Regarding the specific examples of the method 500 executed by the UE in the embodiment, reference may be made to the relevant descriptions of the UE in the aforementioned method 300. For the sake of brevity, repeated description is not provided here.

The present disclosure further discloses a method for information acquisition applicable to an access device. In the method, the access device transmits energy consumption information of the access device to provide the energy consumption information of the access device to a first network element. FIG. 6 illustrates a schematic flowchart of the method 600 for information acquisition according to one embodiment of the present disclosure. This method may optionally be applied to the systems illustrated in FIG. 1, FIG.2A, or FIG.2B, but is not limited thereto. The method includes at least some of the following operation S610.

At operation S610, the access device transmits energy consumption information including the energy consumption information of the access device.

For example, the access device may send energy consumption information of the access device to the NWDAF, and the NWDAF performs energy consumption analytics based on the energy consumption information.

In some embodiments, the energy consumption information of the access device includes at least one of: energy consumption generated by the access device for meeting one or more QoS requirements; energy consumption generated by the access device for serving a UE; and energy consumption generated by the access device for serving a group of UEs.

Regarding the specific examples of the method 600 executed by the access device in the embodiment, reference may be made to the relevant descriptions of the access device in the aforementioned method 300. For the sake of brevity, repeated description is not provided here.

The present disclosure further proposes a method for information acquisition applicable to a fourth network element, and the fourth network element may be the Management Data Analytic Function (MDAF) within the OAM. In the method, the fourth network element can provide energy consumption information to the first network element. FIG. 7 is a schematic flowchart of the method 700 for information acquisition according to one embodiment of the present disclosure. This method may optionally be applied to the systems illustrated in FIG. 1, FIG.2A or FIG.2B, but is not limited thereto. The method includes at least some of the following operation S710.

At operation S710, the fourth network element transmits energy consumption information including at least one of: energy consumption analytics information based on network element granularity and energy consumption analytics information based on slice granularity.

In some embodiments, the energy consumption analytics information based on network element granularity and the energy consumption analytics information based on slice granularity includes at least one of: a time or a scenario when an energy consumption issue occurs in the second network element, a level of the energy consumption issue occurring in the second network element, and recommendation information for the second network element to enter an energy-saving state.

In some embodiments, the fourth network element includes an MDAF.

In some embodiments, the second network element includes an NF.

Regarding the specific examples of the method 700 executed by the fourth network element in the embodiment, reference may be made to the relevant descriptions of the OAM in the aforementioned method 300. For the sake of brevity, repeated description is not provided here.

The present disclosure also proposes a method for information acquisition that can be applied to a second network element, and the second network element may be an NF. In the method, the second network element can provide energy consumption information of the second network element to the first network element. FIG. 8 is a schematic flowchart of a method 800 for information acquisition according to an embodiment of the present disclosure. The method may optionally be applied to the systems shown in FIG. 1, FIG. 2A or FIG. 2B, but is not limited thereto. The method includes at least some of the following operation S810.

At operation S810, the second network element transmits energy consumption information including the energy consumption information of the second network element.

In some embodiments, the energy consumption information of the second network element includes at least one of: energy consumption generated by the second network element for supporting one or more QoS flows; energy consumption generated by the second network element for supporting one or more PDU sessions; and energy consumption generated by the second network element for serving one or more UEs.

In some embodiments, the second network element includes an NF.

Regarding the specific examples of the method 800 executed by the second network element in the embodiment, reference may be made to the relevant descriptions of the second network element in the aforementioned method 300. For the sake of brevity, repeated description is not provided here.

Specific embodiments are described in detail with reference to the accompanying drawings.

### First Embodiment

In the embodiment, the NWDAF is taken as an example of the first network element, for description. In the core network, the NWDAF can provide statistics or prediction in various aspects. Therefore, a new analytics ID supported by the NWDAF is defined in the present embodiment to implement analytics of network energy consumption.

The new analytics ID is defined for network energy consumption analytics. The network energy consumption analytics can provide statistics or predictions of network energy consumption based on UE granularity (single UE or group of UEs), QoS flow granularity, session granularity, slice granularity, network element granularity, etc.

A subscriber requesting the analytics may carry at least one of the following indication parameters in the request:
(1) Analytics ID = Network energy consumption;
(2) a UE list indicating the UE, the network energy consumption of which the requester wants to know;
(3) an application ID indicating that the application corresponding to the application ID requests the network to analyze network energy consumption generated by supporting the application;
(4) QoS information, such as 5G QoS Identifier (5QI), which instructs the NWDAF to analyze the energy consumption information generated by the network for meeting the QoS flow;
(5) Single Network Slice Selection Assistance information (S-NSSAI), a Deep Neural Networks (DNN), slice information and session information, which instructs the NWDAF to analyze the service performed by the slice, or energy consumption of a session using the slice and DNN; and
(6) A preferred target analytics time window, indicating a future time, a prediction result at which the requester wants to know. The time can be relative time, such as 10 minutes later, or absolute time, such as a specific hour and minute, or a period of time.

For the new energy consumption analytics, the parameters that the NWDAF can collect may include the following.

In order to realize network energy consumption analytics under UE granularity, QoS flow granularity, session granularity, slice granularity, and network element granularity, the NWDAF may collect at least one of the following energy consumption information.
(1) The NWDAF collects, from the UE, a change of electric quantity of the UE within a period of time, power consumption of the UE, and energy consumption generated by the UE running an application.
(2) The NWDAF directly or indirectly collects energy consumption of the base station from the RAN side (such as the base station side), for example, energy consumption generated by the base station for meeting a QoS requirement, or energy consumption generated by the base station for serving a UE or a group of UEs. The NWDAF may directly collect the information from the base station, or may indirectly acquire the energy consumption information generated by the base station through the OAM.
(3) The NWDAF obtains information from the OAM side.
   The OAM side has energy consumption analytics information based on network element granularity and slice granularity. For example, the MDAF in the OAM can provide analytics about network energy efficiency, such as when an energy consumption issue occurs in an NF, the level (high, medium, low) of the energy consumption issue, a recommendation to the NF for entering energy saving, and the like. The recommendation to the NF for entering energy saving may include when to enter an energy saving state, and the like. The NWDAF may obtain energy consumption information from the MDAF.
(4) The NWDAF collects energy consumption information from the 5G core network (5GCore, 5GC) side.

The NWDAF can directly collect energy consumption information of the NF from the NF of the core network, for example, energy consumption information generated by the NF in supporting a QoS flow or a Protocol Data Unit (PDU) session, or energy consumption information generated by an NF serving a UE.

Using the energy consumption information collected above, the NWDAF may perform energy consumption analytics, and the energy consumption analytics result may include at least one of the following:
(1) a statistical and/or predicted value of total energy consumption consumed by supporting one or more levels of QoS requirements;
(2) a statistical and/or predicted value of total energy consumption consumed by the network serving a UE or a group of UEs;
(3) added or saved energy consumption if a QoS requirement is raised or lowered to another QoS requirement;
(4) a statistical or predicted value of energy consumed by a NF, a base station, a session, or a slice within a period of time.
(5) a statistical or predicted value of a rate of energy consumption of a NF, a base station, a session, or a slice within a period of time. For example, the total amount of energy consumption within a period of time divided by time is equal to the rate of energy consumption.
(6) a statistical or predicted value of energy consumed by a specific application within a period of time.
(7) a statistical or predicted value of a rate of energy consumption rate of a specific application within a period of time.
(8) a time period during which the analytics result is valid.

After obtaining the above energy consumption analytics result, the NWDAF may send the energy consumption analytics result to the subscriber.

### Second Embodiment

A flow where the subscriber (such as a network element or a UE) subscribes energy consumption analytics.

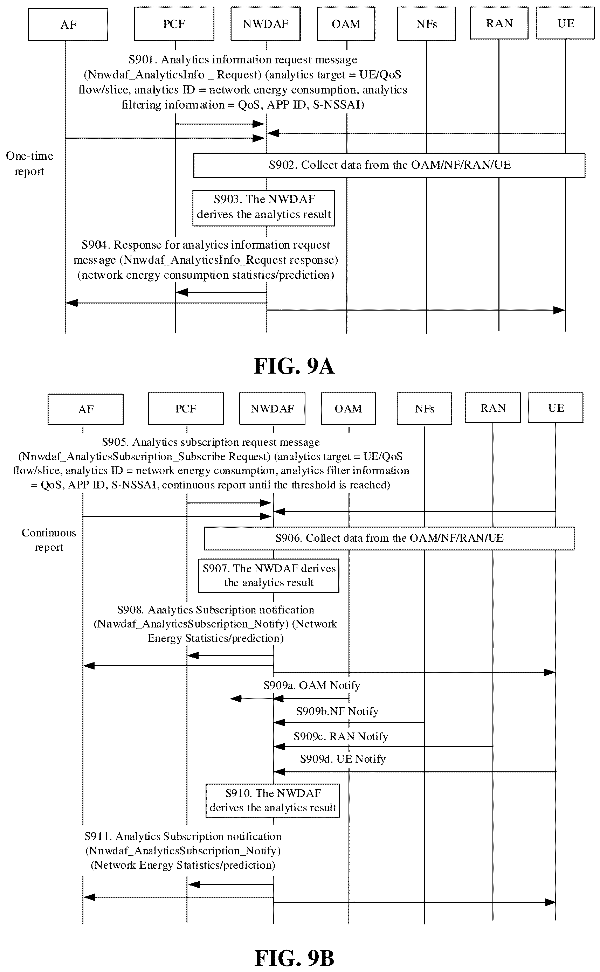

FIG. 9A is a flowchart of an implementation method 1 according to the first embodiment of the present disclosure, which describes an example of a One-time report energy consumption analytics result, and includes operations S901 to S904.

At operation S901, the subscriber of the energy consumption analytics result may include a PCF, an Adaptation Function (AF) and a UE. The subscriber transmits a request Nnwdaf_AnalyticsInfo_Request to the NWDAF. The request is a one-time request, that is, the subscriber transmits one request and the NWDAF feeds back one response. The request includes analytics ID=network energy consumption. The analytics target included in the request may be one UE or a group of UEs. The request may further include analytics filtering information, and the analytics filtering information may include slice information, QoS information, APP ID and the like. The request may also include other parameters in other embodiments, and will not be described in detail herein.

At operation S902, in order to provide the required analytics, the NWDAF collects data from other network elements. For example, the NWDAF may collect energy consumption information or energy consumption data from at least one of the OAM, the NF, the RAN and the UE, and the collected energy consumption information is as described in the first embodiment. The NWDAF can collect data from the UE in following three manners.

In the first manner, the UE transmits the energy consumption information to the AMF through the NAS message, and the AMF transmits the energy consumption information to the NWDAF.

Control signaling may be used for transmission in this manner. Thus, the manner may occupy large signaling overhead, but this manner is direct. The energy consumption information may be directly transmitted to the core network through the NAS message.

In the second manner, the UE transmits the energy consumption information to the AF through the application layer, and the AF transmits the energy consumption information to the NWDAF.

Since the energy consumption information is mostly related to the application, in this mode, the energy consumption information is transmitted to the AF through the application layer in this manner.

In the third manner, the UE transmits the energy consumption information to the UPF through the UP plane, and the UPF forwards the energy consumption information to the NWDAF.

In this case, the UE transmits through the user plane, and the UPF needs to know an IP address of the NWDAF in order for data forwarding.

At operation S903, the NWDAF performs energy consumption analytics on UE granularity, QoS flow granularity, session granularity, slice granularity, base station granularity and application granularity according to the information collected in operation S903, and the generated energy consumption analytics result is as shown in the first embodiment.

At operation S904, the NWDAF sends the generated energy consumption analytics result to the subscriber.

FIG. 9B is a flowchart of an implementation method 2 according to the first embodiment of the present disclosure, which describes an example of a continuous report energy consumption analytics result, and includes the following operations S905 to S911.

At operation S905, the subscriber sends an analytics subscription request message (Nnwdaf_AnalyticsSubscription_Subscribe) request to the NWDAF, and the request is a multi-use request. For example, when the result of the NWDAF meets a condition or the result changes, the NWDAF notifies the subscriber of a new result. Therefore, in addition to the parameters described in operation 1, the request may further carry a continuous report indication. That is, the NWDAF needs to notify the subscriber if a threshold or a condition is met.

At operation S906, in order to provide the required analytics, the NWDAF collects related data from other network elements. For example, the NWDAF may collect energy consumption information or energy consumption data from at least one of the OAM, the NF, the RAN and the UE, and the collected energy consumption data is as described in the first embodiment. The NWDAF can collect data from the UE in following three manners.

In the first manner, the UE transmits the energy consumption information to the AMF through the NAS message, and the AMF transmits the energy consumption information to the NWDAF.

In the second manner, the UE transmits the energy consumption information to the AF through the application layer, and the AF transmits the energy consumption information to the NWDAF.

In the third manner, the UE transmits the energy consumption information to the UPF through the UP plane, and the UPF forwards the energy consumption information to the NWDAF.

At operation S907, the NWDAF performs energy consumption analytics on UE granularity, QoS flow granularity, session granularity, slice granularity, base station granularity and application granularity according to the information collected in operation S906, and the generated energy consumption analytics result is as shown in the first embodiment.

At operation S908, the NWDAF provides the energy consumption analytics result to the subscriber.

At operation S909 a, if the NWDAF configures a threshold to the OAM in operation S906, the OAM notifies NWDAF of a result when the OAM detects, for example, that energy consumption of a NF or a base station exceeds the threshold.

At operation S909b, if the NWDAF configures a threshold to other NF in operation S906, the other NF notifies the NWDAF when energy consumption generated by the other NF for serving a UE or a QoS flow exceeds the threshold.

At operation S909c, if the NWDAF configures a threshold to a base station in operation S906, the base station notifies the NWDAF when energy consumption of the base station exceeds the threshold.

At operation S909d, if the NWDAF configures a threshold to a UE in operation S906, the UE notifies the NWDAF when energy consumption of the UE exceeds the threshold.

It should be noted that in the entire operation S909 (including operations S909a, S909b, S909c and S909d), the energy consumption notified by the node may have different granularities, for example, the UE may notify that the total energy consumption thereof exceeds a threshold, or that the energy consumption consumed by an application in the UE exceeds a threshold. The base station may notify that the total energy consumption exceeds a threshold, or that the energy consumption of the base station for serving a specific UE exceeds a threshold, and so on. This depends on the granularity at which the NWDAF subscribes notification information to individual nodes.

At operations S910 to S911, the NWDAF derives an energy consumption analytics result, such as a new prediction result, according to the updated information, and notifies the energy consumption analytics result to the subscribers.

### Third Embodiment

This embodiment describes a manner in which the subscriber subsequently use the analytics result.

Among the subscriber according to the second embodiment, after receiving data, the UE and the AF may adjust a mode of energy consumption based on an implementation thereof. For example, the UE may turn off some applications to reduce energy consumption. The AF can reduce the amount of transmitted data or reduce the usage frequency of service to reduce energy consumption. How the PCF adjusts the policy after obtaining the statistical or prediction information of energy consumption to reduce the energy consumption of the network and achieve energy saving is described in this embodiment.

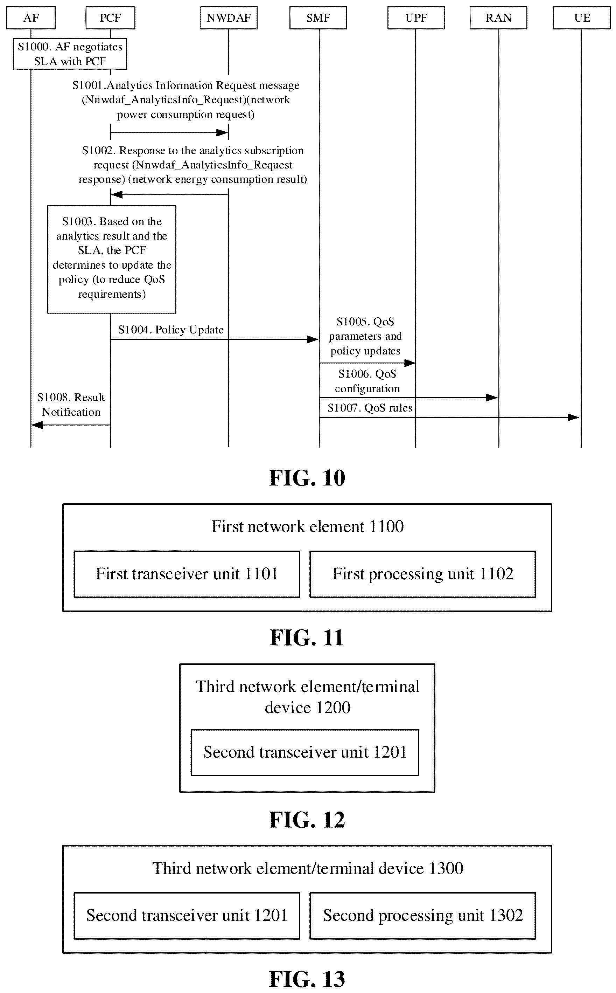

FIG. 10 is a flowchart of an implementation of a third embodiment of the present disclosure. The implementation includes operations S1000 to S1008.

At operation S1000, the AF and the PCF negotiate a Service Level Agreement (SLA) in advance. The SLA includes that the AF agrees to the network reducing the QoS requirements and a degree of reduction, and that the reduced QoS level and the energy efficiency can be saved are notified to the AF. In addition, the SLA may further include when the AF agrees to reduce the Qos and save the energy, the benefits (such as reduced billing) that the AF can obtain.

At operations S 1001 to S 1002, as described in the second embodiment, the PCF subscribes energy efficiency analytics from the NWDAF.

At operation S1003, the PCF determines to update the policy according to the analytics result, the SLA criterion and the local configuration (for example, the PCF takes energy saving as a determination criterion) of the PCF. The updated policy is an energy saving policy, mainly for reducing the QoS requirement of a service.

At operation S 1004, the PCF sends the updated energy saving policy to the SMF, which includes the updated PCC rule. The PCC rule includes new QoS parameters, and indicates the SMF that the QoS parameters are updated for energy saving.

At operations S 1005 to S 1007, the SMF transmits the updated QoS parameters and an energy-saving indication to the UPF, and the UPF can enter the energy-saving mode, thereby reducing the QoS demand. A QoS profile and an energy-saving indication are transmitted to the RAN, and the RAN enters an energy-saving state to modify the resources allocated for the QoS flow. A QoS rule and an energy saving indication are transmitted to the UE, and the UE enters the energy-saving state, and transmits an uplink data packet and receives a downlink data packet according to the modified QoS requirements.

At operation S1008, the PCF notifies the AF of the updated QoS requirement and the energy consumption saved under the updated QoS.

In addition to the above policy adjustment manners, the PCF can perform policy adjustment by the following manners.

In the first manner, when the PCF regards according to the received energy consumption analytics result that a PDU session or a slice consumes too much energy, the PCF may send a new URSP rule to the UE to instruct the UE to establish a new PDU session or route traffic to a PDU session or a slice that consumes less resources.

In the second manner, the PCF determines to update the ANDSF according to the received energy consumption analytics result, and transmits the updated ANDSF to the UE. For example, if the UE consumes too much energy in the current 3GPP access method, the UE may be instructed to preferentially select WIFI access.

In the third manner, if the QoS parameter is reduced due to the energy-saving policy of the PCF, the PCF can update a monitoring threshold and/or a monitoring time of usage of the SMF side, for example, lowering the monitoring threshold and increasing the monitoring time. Therefore, the PCF can correctly implement threshold control (gating) or other policy when the monitored usage exceeds the threshold.

To sum up, by defining a new analytics ID, this technical solution can support the NWDAF to provide analytics for network energy consumption, so that the subscribing network elements can implement subsequent operations based on the result. For example, the PCF may determine to update the energy saving policy based on this, reduce the QoS requirement, and inform the AF of the result. According to the solution of the embodiment of the present disclosure, from the perspective of the network, the energy consumption of the network is reduced, and the large demand of low carbon is met. From the perspective of AF and UE, QoS is reduced in order to save energy, and also the network can provide lower billing, thereby saving the overhead of the AF or the UE.

FIG. 11 is a schematic block diagram of a first network element 1100 according to an embodiment of the present disclosure. The first network element 1100 may include a first transceiver unit 1101 and a first processing unit 1102.

The first transceiver unit 1101 is configured to receive an analytics request including a first parameter. The first parameter requests analytics for network energy consumption.

The first processing unit 1102 is configured to acquire energy consumption information according to the analytics request.

In some embodiments, the first parameter includes at least one of:
an analytics ID, indicating network energy consumption;
UE information;
an application identification;
QoS information;
Slice information;
a DNN;
Session information; and
a target analytics time window.

In some implementations, the first processing unit 1102 is configured to: acquire at least one of energy consumption information of the UE, energy consumption information of the access device, energy consumption analytics information based on network element granularity, energy consumption analytics information based on slice granularity, and energy consumption information of the second network element.

In some implementations, the first processing unit 1102 is configured to acquire energy consumption information of the UE from at least one of the AMF, the AF and the UPF.

In some embodiments, the energy consumption information of the UE includes at least one of a change of electric quantity of the UE, power consumption of the UE, and energy consumption generated when the UE runs one or more applications.

In some implementations, the first processing unit 1102 is configured to acquire energy consumption information of the access device from the access device or the network management system OAM.

In some embodiments, the energy consumption information of the access device includes at least one of energy consumption generated by the access device for meeting one or more quality of service (QoS) requirements, energy consumption generated by the access device for serving a UE, and energy consumption generated by the access device for serving a group of UEs.

In some implementations, the first processing unit 1102 is configured to acquire energy consumption analytics information based on network element granularity or energy consumption analytics information based on slice granularity from the OAM.

In some embodiments, the energy consumption analytics information based on the network element granularity or the energy consumption analytics information based on the slice granularity includes at least one of a time or a scenario when an energy consumption issue occurs in the second network element, a level of the energy consumption issue occurring in the second network element, and recommendation information for the second network element to enter an energy-saving state.

In some implementations, the first processing unit 1102 is configured to acquire energy consumption information of the second network element from the second network element.

In some embodiments, the energy consumption information of the second network element includes at least one of energy consumption generated by the second network element for supporting one or more QoS flows, energy consumption generated by the second network element for supporting one or more PDU sessions, and energy consumption generated by the second network element for serving one or more UEs.

In some embodiments, the first processing unit 1102 is further configured to perform energy consumption analytics using the energy consumption information.

In some embodiments, the energy consumption analytics result includes at least one of:
a statistical and/or predicted value of total energy consumption consumed by supporting one or more levels of QoS requirements;
a statistical and/or predicted value of total energy consumption consumed by serving a UE or a group of UEs;
energy consumption added by raising the one or more levels of QoS requirements;
energy consumption decreased by lowering the one or more levels of QoS requirements;
a statistical and/or predicted value of energy consumed by one or more second network elements within a period of time;
a statistical and/or predicted value of energy consumed by the access device within a period of time;
a statistical and/or predicted value of energy consumed by one or more sessions within a period of time;
a predicted and/or predicted value of energy consumed by one or more slices within a period of time;
a predicted and/or predicted value of energy consumed by one or more applications within a period of time;
a predicted and/or predicted value of energy consumed by one or more QoS flows within a period of time;
a statistical and/or predicted value of a rate of energy consumption of one or more second network elements within a period of time;
a statistical and/or predicted value of a rate of energy consumption of the access device within a period of time;
a statistical and/or predicted value of a rate of energy consumption of one or more sessions within a period of time;
a predicted and/or predicted value of a rate of energy consumption of one or more slices within a period of time;
a predicted and/or predicted value of a rate of energy consumption of one or more applications within a period of time;
a predicted and/or predicted value of a rate of energy consumption of one or more QoS flows within a period of time; and
a valid time of the analytics result.

In some embodiments, the first transceiver unit 1101 is configured to receive the analytics request from a third network element or a UE.

In some embodiments, the first transceiver unit 1101 is further configured to transmit an energy consumption analytics result to the third network element or the UE.

In some embodiments, the analytics request includes an analytics information request message.

In some implementations, the analytics request includes an analytics subscription request message.

In some embodiments, the first processing unit 1102 is further configured to, when new energy consumption information is acquired, perform energy consumption analytics using the new energy consumption information, and transmits an energy consumption analytics result to the third network element or the UE. The new energy consumption information includes energy consumption information exceeding a first threshold.

In some embodiments, the first network element includes an NWDAF.

In some embodiments, the second network element comprises an NF.

In some embodiments, the third network element comprises an AF or a PCF.

The first network element 1100 in the embodiment of the present disclosure can implement the corresponding functions of the first network element in the above-described method embodiment. Regarding the flows, functions, implementation modes and beneficial effects corresponding to various modules (sub-modules, units, or components, etc.) in the first network element 1100, reference may be made to the corresponding description in the above-described method embodiment, and repeated description is avoided herein. The functions described with respect to various modules (the sub-modules, the units, the components, etc.) in the first network element 1100 of the embodiment of the present disclosure may be implemented by different modules (sub-modules, units, components etc.), or may be implemented by the same module (a sub-module, a unit, a component, etc.).

FIG. 12 is a schematic block diagram of a third network element or terminal device 1200 according to an embodiment of the present disclosure. The third network element or terminal device 1200 may include a second transceiver unit 1201.

The second transceiver unit 1201 is configured to send an analytics request to the first network element, and the analytics request includes a first parameter, and the first parameter is used for requesting analytics for network energy consumption.

In some embodiments, the first parameter includes at least one of:
an analytics ID, indicating network energy consumption;
UE information;
an application identification;
QoS information;
Slice information;
a DNN;
Session information; and
a target analytics time window.

In some embodiments, the second transceiver unit 1201 is further configured to receive an energy consumption analytics result from the first network element, and the energy consumption analytics result is obtained based on analytics for energy consumption information.

In some embodiments, the energy consumption analytics result includes at least one of:
a statistical and/or predicted value of total energy consumption consumed by supporting one or more levels of QoS requirements;
a statistical and/or predicted value of total energy consumption consumed by serving a UE or a group of UEs;
energy consumption added by raising the one or more levels of QoS requirements;
energy consumption decreased by lowering the one or more levels of QoS requirements;
a statistical and/or predicted value of energy consumed by one or more second network elements within a period of time;
a statistical and/or predicted value of energy consumed by the access device within a period of time;
a statistical and/or predicted value of energy consumed by one or more sessions within a period of time;
a predicted and/or predicted value of energy consumed by one or more slices within a period of time;
a predicted and/or predicted value of energy consumed by one or more applications within a period of time;
a predicted and/or predicted value of energy consumed by one or more QoS flows within a period of time; and
a valid time of the analytics result.

In some embodiments, the analytics request includes an analytics information request message.

In some implementations, the analytics request includes an analytics subscription request message.

In some embodiments, as shown in FIG. 13, the third network element or the terminal device further includes a second processing unit 1302.

The second processing unit 1302 is configured to update an energy saving policy according to at least one of the energy consumption analytics result, a service level agreement (SLA), and a local configuration;
The second transceiver unit 1201 is further configured to transmit the updated energy saving policy.

In some embodiments, the second processing unit 1302 is further configured to negotiate the SLA with the fourth network element.

In some embodiments, the fourth network element includes an AF.

In some embodiments, the updated energy saving policy includes at least one of a QoS parameter and an energy saving indication.

In some embodiments, the second transceiver unit 1201 is configured to transmit the updated energy saving policy to the SMF.

In some embodiments, the second processing unit 1302 is further configured to update the monitoring threshold and/or the monitoring time of measurement of the SMF.

In some embodiments, the second transceiver unit 1201 is further configured to transmit the URSP rule to the UE in response to that it is determined based on the energy consumption analytics result that energy consumed by one or more PDU sessions is greater than a predetermined threshold, or that energy consumed by one or more slices is greater than a predetermined threshold. The URSP rule is used to instruct the UE to establish another PDU session or to route traffic onto a PDU session or slice which consumes less energy than a predetermined threshold.

In some embodiments, the second transceiver unit 1201 is further configured to, based on the energy consumption analytics result, determine to update the ANDSF, and the transmit the updated ANDSF to the UE.

In some embodiments, the first network element includes an NWDAF.

In some embodiments, the third network element comprises an AF or a PCF.

The third network element or the terminal devices 1200 and 1300 according to the embodiments of the present disclosure can implement the corresponding functions of the third network element or the UE in the above-described method embodiments. Regarding the flows, functions, implementation manners, and beneficial effects corresponding to various modules (sub-modules, units, or components, etc.) in the third network element or the terminal devices 1200 and 1300, reference may be made to the corresponding description in the above-described method embodiment, and repeated description is avoided herein. The functions described with respect to various modules (sub-modules, units or components, etc.) in the third network element or the terminal devices 1200 and 1300 of the embodiments of the present disclosure may be implemented by different modules (sub-modules, units, components, etc.), or may be implemented by the same module (a sub-module, a unit, a component, or the like).

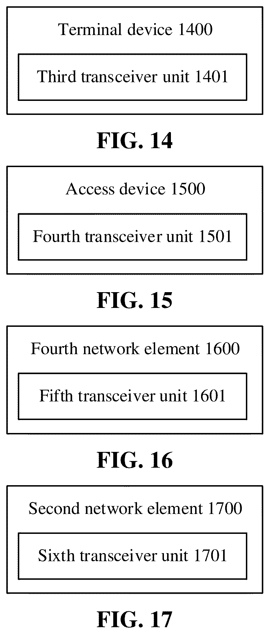

FIG. 14 is a schematic block diagram of a terminal device 1400 according to an embodiment of the present disclosure. The terminal device 1400 may include a third transceiver unit 1401.

The third transceiver unit 1401 is configured to transmit energy consumption information including energy consumption information of a terminal device (UE).

In some embodiments, the UE transmits energy consumption information in at least one of following manners.

The UE transmits a NAS message including energy consumption information of the UE.

The UE transmits energy consumption information of the UE through an application layer.

The UE transmits the energy consumption information of the UE through the user plane.

In some embodiments, the energy consumption information of the UE includes at least one of a change of electric quantity of the UE, power consumption of the UE, and power consumption generated when the UE runs one or more applications.

The terminal device 1400 according to the embodiment of the present disclosure can implement the corresponding functions of the UE in the above-described method embodiment. Regarding the flows, functions, implementation manners and beneficial effects corresponding to various modules (sub-modules, units, or components, etc.) in the terminal device 1400, reference may be made to the corresponding description in the above-described method embodiment, and repeated description is avoided herein. The functions described with respect to various modules (sub-modules, units or components, etc.) in the terminal device 1400 of the embodiments of the present disclosure may be implemented by different modules (sub-modules, units, components, etc.), or may be implemented by the same module (a sub-module, a unit, a component or the like).

FIG. 15 is a schematic block diagram of an access device 1500 according to an embodiment of the present disclosure. The access device 1500 may include a fourth transceiver unit 1501.

The fourth transceiver unit 1501 is configured to transmit energy consumption information, and the energy consumption information includes energy consumption information of the access device.

In some embodiments, the energy consumption information of the access device includes at least one of energy consumption generated by the access device for meeting one or more QoS requirements; energy consumption generated by the access device for serving a UE; and energy consumption generated by the access device for serving a group of UEs.

The access device 1500 according to the embodiment of the present disclosure can implement the corresponding function of the access device in the above-described method embodiment. Regarding the flows, functions, implementation manners and beneficial effects corresponding to various modules (sub-modules, units, or components, etc.) in the access device 1500, reference may be made to the corresponding description in the above-described method embodiment, and repeated description is avoided herein. The functions described with respect to various modules (sub-modules, units or components, etc.) in the access device 1500 of the embodiments of the present disclosure may be implemented by different modules (sub-modules, units, components, etc.), or may be implemented by the same module (a sub-module, a unit, a component or the like).

FIG. 16 is a schematic block diagram of a fourth network element 1600 according to an embodiment of the present disclosure. The fourth network element 1600 may include a fifth transceiver unit 1601.

The fifth transceiver unit 1601 is configured to transmit energy consumption information including at least one of energy consumption analytics information based on network element granularity and energy consumption analytics information based on slice granularity.

In some embodiments, the energy consumption analytics information based on the network element granularity or the energy consumption analytics information based on the slice granularity includes at least one of a time or a scenario when an energy consumption issue occurs in the second network element, a level of the energy consumption issue occurring in the second network element, and recommendation information for the second network element to enter an energy-saving state.

In some embodiments, the fourth network element includes an MDAF.

In some embodiments, the second network element includes an NF.

The fourth network element 1600 of the embodiment of the present disclosure can realize the corresponding function of the fourth network element in the above-described method embodiment. Regarding the flows, functions, implementation manners and beneficial effects corresponding to various modules (sub-modules, units, or components, etc.) in the fourth network element 1600, reference may be made to the corresponding description in the above-described method embodiment, and repeated description is avoided herein. The functions described with respect to various modules (sub-modules, units or components, etc.) in the fourth network element 1600 of the embodiments of the present disclosure may be implemented by different modules (sub-modules, units, components, etc.), or may be implemented by the same module (a sub-module, a unit, a component or the like).

FIG. 17 is a schematic block diagram of a second network element 1700 according to an embodiment of the present disclosure. The second network element 1700 may include a sixth transceiver unit 1701.

The sixth transceiver unit 1701 is configured to transmit energy consumption information including energy consumption information of the second network element.

In some embodiments, the energy consumption information of the second network element includes at least one of energy consumption generated by the second network element for supporting one or more QoS flows, energy consumption generated by the second network element for supporting one or more PDU sessions, and energy consumption generated by the second network element for serving one or more UEs.

In some embodiments, the second network element includes an NF.

The second network element 1700 of the embodiment of the present disclosure can implement the corresponding function of the second network element in the above-described method embodiment. Regarding the flows, functions, implementation manners and beneficial effects corresponding to various modules (sub-modules, units, or components, etc.) in the second network element 1700, reference may be made to the corresponding description in the above-described method embodiment, and repeated description is avoided herein. The functions described with respect to various modules (sub-modules, units or components, etc.) in the second network element 1700 of the embodiments of the present disclosure may be implemented by different modules (sub-modules, units, components, etc.), or may be implemented by the same module (a sub-module, a unit, a component or the like).

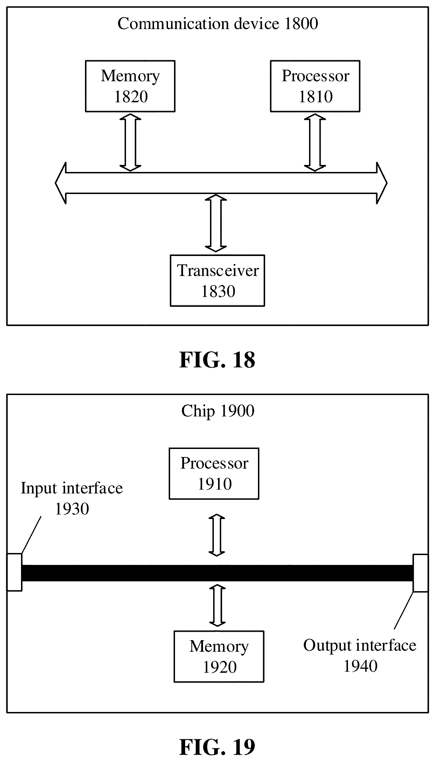

FIG. 18 is a schematic structural diagram of a communication device 1800 according to an embodiment of the present disclosure. The communication device 1800 includes a processor 1810 that can call and run a computer program from a memory to cause the communication device 1800 to implement the method in the embodiment of the present disclosure.

In an embodiment, the communication device 1800 may further include a memory 1820. Here, the processor 1810 may call and run a computer program from the memory 1820 to cause the communication device 1800 to implement the method in the embodiment of the present disclosure.

The memory 1820 may be a separate device independent of the processor 1810 or may be integrated in the processor 1810.

In an embodiment, the communication device 1800 may further include a transceiver 1830 that the processor 1810 may control the transceiver 1830 to communicate with other devices, in particular, may transmit information or data to other devices or receive information or data transmitted by other devices.

Among them, transceiver 1830 may include a transmitter and a receiver. The transceiver 1830 may further include antennas, and the number of antennas may be one or more.

In an embodiment, the communication device 1800 may be the network element in the embodiment of the present disclosure, including the first network element, the second network element, the third network element, and the fourth network element, and the communication device 1800 may implement corresponding processes implemented by the network elements in each method of the embodiment of the present disclosure, and will not be repeated here for the sake of brevity.

In an embodiment, the communication device 1800 may be the terminal device according to the embodiment of the present disclosure, and the communication device 1800 may implement corresponding flows implemented by the terminal device in each method according to the embodiment of the present disclosure, and the description thereof will not be repeated here for the sake of simplicity.

In an embodiment, the communication device 1800 may be the access device according to the embodiment of the present disclosure, and the communication device 1800 may implement corresponding flows implemented by the access device in each method according to the embodiment of the present disclosure, and will not be described herein for the sake of brevity.

FIG. 19 is a schematic structural diagram of a chip 1900 according to an embodiment of the present disclosure. The chip 1900 includes a processor 1910, which can call and run a computer program from a memory to implement the method in the embodiment of the present disclosure.

In an embodiment, the chip 1900 may further include a memory 1920. The processor 1910 may call and run a computer program from the memory 1920 to implement the methods executed by the network element, the terminal device and the access device in the embodiment of the present disclosure.

The memory 1920 may be a separate device independent of the processor 1910 or may be integrated in the processor 1910.

In an embodiment, the chip 1900 may further include an input interface 1930. The processor 1910 may control the input interface 1930 to communicate with other devices or chips, specifically, may acquire information or data transmitted by other devices or chips.

In an embodiment, the chip 1900 may further include an output interface 1940. The processor 1910 may control the output interface 1940 to communicate with other devices or chips, specifically, may output information or data to other devices or chips.

In an embodiment, the chip can be applied to the network elements in the embodiments of the present disclosure, including the first network element, the second network element, the third network element, and the fourth network element, and the chip can implement corresponding flows implemented by the network elements in each method of the embodiments of the present disclosure, and will not be repeatedly described here for the sake of brevity.

In an embodiment, the chip may be applied to the terminal device in the embodiment of the present disclosure, and the chip can implement corresponding flows implemented by the terminal device in each method of the embodiment of the present disclosure, and will not be repeatedly described here for the sake of simplicity.

In an embodiment, the chip may be applied to the access device in the embodiment of the present disclosure, and the chip may implement corresponding flows implemented by the access device in each method of the embodiment of the present disclosure, and will not be repeated here for the sake of brevity.

The chips applied to the network element, the UE and the access device may be the same chip or different chips.

It should be understood that the chip mentioned in the embodiments of the present disclosure may also be referred to as a system-level chip, or a system chip, a system-on-chip, or a system-on-chip chip.

The processor mentioned above may be a general-purpose processor, a digital signal processor (DSP), a field programmable gate array (FPGA), an application specific integrated circuit (ASIC) or other programmable logic device, a transistor logic device, a discrete hardware component or the like. The general-purpose processor mentioned above may be a microprocessor or any conventional processor or the like.

The memory mentioned above may be a volatile memory or a non-volatile memory, or may include both volatile and non-volatile memory. The non-volatile memory may be a read-only memory (ROM), a programmable read-only memory (PROM), an erasable PROM (EPROM), an electrically EPROM (EEPROM) or a flash memory. The volatile memory may be a random access memory (RAM).

It should be understood that the above memory is illustrative but not restrictive, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM) and the like. That is, the memory in the embodiments of the present disclosure is intended to include, but is not limited to, these and any other suitable type of memory.

The embodiments described above may be implemented in whole or in part by software, hardware, firmware, or any combination thereof. When implemented using software, the embodiment may be implemented in whole or in part in the form of a computer program product. The computer program product includes one or more computer instructions. When the computer program instructions are loaded and executed on a computer, the flows or functions according to embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium. For example, the computer instructions may be transmitted from a website site, a computer, a server, or a data center by wired (e.g., a coaxial cable, an optical fiber, a Digital Subscriber Line (DSL)) or wireless (e.g., infrared, wireless, microwave, etc.) manner to another website site, computer, server, or data center. The computer-readable storage medium may be any available medium accessible by a computer or a data storage device such as a server, a data center, or the like that contains one or more available media integrations. The available medium may be a magnetic medium (e.g., a floppy disk, a hard disk, a magnetic tape), an optical medium (e.g., a DVD), or a semiconductor medium (e.g., a Solid State Disk (SSD)), etc.

It should be understood that in various embodiments of the present disclosure, the sequence numbers of the above-described processes do not mean the sequence of execution, and the sequence of execution of each process should be determined by a function and internal logic thereof, and should not constitute any limitation on the implementation of the embodiments of the present disclosure.

Those skilled in the art can clearly understand that for convenience and conciseness of the description, regarding the specific operations processes of the systems, devices, and units described above, reference may be made to the corresponding processes in the aforementioned method embodiments, and will not be repeatedly described herein.

The foregoing is merely a specific embodiment of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be based on the scope of protection of this claim.

## Claims

1. A method for information acquisition, comprising:
receiving, by a first network element, an analytics request, wherein the analytics request comprises a first parameter, and the first parameter is used to request analytics for network energy consumption; and
acquiring, by the first network element, energy consumption information according to the analytics request.

2. The method of claim 1, wherein the first parameter comprises at least one of:
an analytics identification (ID), indicating network energy consumption;
user equipment (UE) information;
an application ID;
QoS information;
slice information;
a data Network Name (DNN);
session information; or
a target analytics time window.

3. The method of claim 1 or 2, wherein the acquiring by the first network element energy consumption information comprises:
acquiring, by the first network element, at least one of energy consumption information of a user equipment (UE), energy consumption information of an access device, energy consumption analytics information based on network element granularity, energy consumption analytics information based on slice granularity, or energy consumption information of a second network element.

4. The method of claim 3, wherein the acquiring by the first network element the energy consumption information of the UE comprises:
acquiring, by the first network element, energy consumption information of the UE from at least one of a mobility management function (AMF), an application function (AF) or a user plane function (UPF).

5. The method of claim 3 or 4, wherein the energy consumption information of the UE comprises at least one of a change of electric quantity of the UE, power consumption of the UE, or power consumption generated when the UE runs one or more applications

6. The method of claim 3, wherein the acquiring by the first network element the energy consumption information of the access device comprises:
acquiring, by the first network element, energy consumption information of the access device from the access device or a network management system (OAM).

7. The method of claim 3 or 6, wherein the energy consumption information of the access device includes at least one of energy consumption generated by the access device for meeting one or more quality of service (QoS) requirements, energy consumption generated by the access device for serving a UE, or energy consumption generated by the access device for serving a group of UEs.

8. The method of claim 3, wherein the acquiring by the first network element energy consumption analytics information based on network element granularity or energy consumption analytics information based on slice granularity comprises:
acquiring, by the first network element, energy consumption analytics information based on network element granularity or energy consumption analytics information based on slice granularity from the OAM.

9. The method of claim 3 or 8, wherein the energy consumption analytics information based on network element granularity or the energy consumption analytics information based on slice granularity comprises at least one of a time or a scenario when an energy consumption issue occurs in the second network element, a level of the energy consumption issue occurring in the second network element, or recommendation information for the second network element to enter an energy-saving state.

10. The method of claim 3, wherein the acquiring by the first network element energy consumption information of the second network element comprises:
acquiring, by the first network element, energy consumption information of the second network element from the second network element.

11. The method of claim 3 or 10, wherein the energy consumption information of the second network element comprises at least one of energy consumption generated by the second network element for supporting one or more QoS flows, energy consumption generated by the second network element for supporting one or more PDU sessions, or energy consumption generated by the second network element for serving one or more UEs.

12. The method of any one of claims 1 to 11, further comprising: performing, by the first network element, energy consumption analytics using the energy consumption information.

13. The method of claim 12, wherein an energy consumption analytics result comprises at least one of:
a statistical and/or predicted value of total energy consumption consumed by supporting one or more levels of QoS requirements;
a statistical and/or predicted value of total energy consumption consumed by serving a UE or a group of UEs;
energy consumption added by raising the one or more levels of QoS requirements;
energy consumption decreased by lowering the one or more levels of QoS requirements;
a statistical and/or predicted value of energy consumed by one or more second network elements within a period of time;
a statistical and/or predicted value of energy consumed by the access device within a period of time;
a statistical and/or predicted value of energy consumed by one or more sessions within a period of time;
a predicted and/or predicted value of energy consumed by one or more slices within a period of time;
a predicted and/or predicted value of energy consumed by one or more applications within a period of time;
a predicted and/or predicted value of energy consumed by one or more QoS flows within a period of time;
a statistical and/or predicted value of a rate of energy consumption of one or more second network elements within a period of time;
a statistical and/or predicted value of a rate of energy consumption of the access device within a period of time;
a statistical and/or predicted value of a rate of energy consumption of one or more sessions within a period of time;
a predicted and/or predicted value of a rate of energy consumption of one or more slices within a period of time;
a predicted and/or predicted value of a rate of energy consumption of one or more applications within a period of time;
a predicted and/or predicted value of a rate of energy consumption of one or more QoS flows within a period of time; or
a valid time of the analytics result.

14. The method of any one of claims 1 to 13, wherein the receiving by the first network element the analytics request comprises
receiving, by the first network element, the analytics request from a third network element or a UE.

15. The method of claim 14, further comprising: transmitting, by the first network element, an energy consumption analytics result to the third network element or the UE.

16. The method of claim 14 or 15, wherein the analytics request comprises an analytics information request message.

17. The method of claim 14 or 15, wherein the analytics request comprises an analytics subscription request message.

18. The method of claim 17, further comprising:
when the first network element acquires new energy consumption information, performing, by the first network element, energy consumption analytics based on the new energy consumption information, and transmitting, by the first network element, an energy consumption analytics result to the third network element or the UE, wherein the new energy consumption information comprises energy consumption information exceeding a first threshold.

19. The method of any one of claims 1 to 18, wherein the first network element comprises a network data analysis function (NWDAF).

20. The method of any one of claims 3 to 11, wherein the second network element comprises a network function (NF).

21. The method of any one of claims 14 to 18, wherein the third network element comprises an application function (AF) or a policy control function (PCF).

22. A method for information acquisition, comprising:
transmitting, by a third network element or a user equipment (UE), an analytics request to a first network element, wherein the analytics request comprises a first parameter, and the first parameter is used to request analytics for network energy consumption.

23. The method of claim 22, wherein the first parameter comprises at least one of:
an analytics identification (ID), indicating network energy consumption;
UE information;
an application ID;
QoS information;
slice information;
a data Network Name (DNN);
session information; or
a target analytics time window.

24. The method of claim 22 or 23, further comprising: receiving, by the third network element or the UE, an energy consumption analytics result from the first network element, wherein the energy consumption analytics result is obtained based on analytics for energy consumption information.

25. The method of claim 24, wherein the energy consumption analytics result comprises at least one of:
a statistical and/or predicted value of total energy consumption consumed by supporting one or more levels of QoS requirements;
a statistical and/or predicted value of total energy consumption consumed by serving a UE or a group of UEs;
energy consumption added by raising the one or more levels of QoS requirements;
energy consumption decreased by lowering the one or more levels of QoS requirements;
a statistical and/or predicted value of energy consumed by one or more second network elements within a period of time;
a statistical and/or predicted value of energy consumed by the access device within a period of time;
a statistical and/or predicted value of energy consumed by one or more sessions within a period of time;
a predicted and/or predicted value of energy consumed by one or more slices within a period of time;
a predicted and/or predicted value of energy consumed by one or more applications within a period of time;
a predicted and/or predicted value of energy consumed by one or more QoS flows within a period of time; or
a valid time of the analytics result.

26. The method of any one of claims 22 to 25, wherein the analytics request comprises an analytics information request message.

27. The method of any one of claims 22 to 25, wherein the analytics request comprises an analytics subscription request message.

28. The method of claim 24 or 25, further comprising:
updating, by the third network element, an energy saving policy according to at least one of the energy consumption analytics result, a service level agreement (SLA) or a local configuration; and
transmitting, by the third network element, the updated energy-saving policy.

29. The method of claim 28, further comprising: negotiating, by the third network element, the SLA with a fourth network element.

30. The method of claim 29, wherein the fourth network element comprises an application function (AF).

31. The method of any one of claims 28 to 30, wherein,
the updated energy saving policy comprises at least one of a QoS parameter or an energy saving indication.

32. The method of any one of claims 28 to 31, wherein the transmitting, by the third network element, the updated energy saving policy comprises:
transmitting, by the third network element, the updated energy saving policy to a session management function (SMF).

33. The method of any one of claims 28 to 32, further comprising: updating, by the third network element, a monitoring threshold and/or a monitoring time for measurements of the SMF.

34. The method of claim 24 or 25, further comprising,
in response to that the third network element determines, based on the energy consumption analytics result, that energy consumption of one or more Protocol Data Unit (PDU) sessions exceeds a predetermined threshold, or that energy consumption of one or more slices exceeds a predetermined threshold, transmitting, by the third network element, a User Equipment Route Selection Policy (URSP) rule to the UE, wherein the URSP rule instructs the UE to establish another PDU session or to route the traffic to a PDU session or slice, energy consumption of which is below the predetermined threshold.

35. The method of claim 24 or 25, further comprising,
determining, by the third network element, to update an access network discovery and selection function (ANDSF) according to the energy consumption analytics result, and transmitting, by the third network element, the updated ANDSF to the UE.

36. The method of any one of claims 22 to 35, wherein the first network element comprises an NWDAF.

37. The method of any one of claims 22 to 35, wherein the third network element comprises an application function (AF) or a policy control function (PCF).

38. A method for information acquisition, comprising:
transmitting, by a user equipment (UE), energy consumption information, the energy consumption information comprising energy consumption information of the UE.

39. The method of claim 38, wherein the transmitting by the UE energy consumption information comprises at least one of:
transmitting, by the UE, a NAS message, wherein the NAS message comprises energy consumption information of the UE;
transmitting, by the UE, energy consumption information of the UE through an application layer; or
transmitting, by the UE, energy consumption information of the UE through a user plane.

40. The method of claim 39, wherein the energy consumption information of the UE comprises at least one of a change in electric quantity of the UE, power consumption of the UE, or energy consumption generated when the UE runs one or more applications.

41. A method for information acquisition, comprising:
transmitting, by an access device, energy consumption information, wherein the energy consumption information comprises energy consumption information of the access device.

42. The method of claim 41, wherein the energy consumption information of the access device comprises at least one of energy consumption generated by the access device for meeting one or more quality of service (QoS) requirements, energy consumption generated by the access device for serving a UE, or energy consumption generated by the access device for serving a group of UEs.

43. A method for information acquisition, comprising:
transmitting, by a fourth network element, energy consumption information comprising at least one of energy consumption analytics information based on network element granularity or energy consumption analytics information based on slice granularity.

44. The method of claim 43, wherein the energy consumption analytics information based on network element granularity or the energy consumption analytics information based on slice granularity comprises at least one of a time or a scenario when an energy consumption issue occurs in the second network element, a level of the energy consumption issue occurring in the second network element, or recommendation information for the second network element to enter an energy-saving state.

45. The method of claim 43 or 44, wherein the fourth network element comprises a management data analysis function (MDAF).

46. The method of claim 44, wherein the second network element comprises a network function (NF).

47. A method for information acquisition, comprising:
transmitting, by a second network element, energy consumption information, wherein the energy consumption information comprises energy consumption information of the second network element.

48. The method of claim 47, wherein the energy consumption information of the second network element comprises at least one of energy consumption generated by the second network element for supporting one or more QoS flows, energy consumption generated by the second network element for supporting one or more PDU sessions, or energy consumption generated by the second network element for serving one or more UEs.

49. The method of claim 47 or 48, wherein the second network element comprises a network function (NF).

50. A first network element, comprising:
a first transceiver unit configured to receive an analytics request, wherein the analytics request comprises a first parameter, and the first parameter is used to request analytics for network energy consumption; and
a first processing unit configured to acquire energy consumption information according to the analytics request.

51. A third network element, comprising:
a second transceiver unit configured to transmit an analytics request to a first network element, wherein the analytics request comprises a first parameter, and the first parameter is used for requesting analytics for network energy consumption.

52. A terminal device, comprising:
a second transceiver unit configured to transmit an analytics request to a first network element, wherein the analytics request comprises a first parameter, and the first parameter is used for requesting analytics for network energy consumption.

53. A terminal device, comprising:
a third transceiver unit configured to transmit energy consumption information, wherein the energy consumption information comprises energy consumption information of the terminal device.

54. An access device, comprising:
a fourth transceiver unit configured to transmit energy consumption information, wherein the energy consumption information comprises energy consumption information of the access device.

55. A fourth network element, comprising:
a fifth transceiver unit configured to transmit energy consumption information, wherein the energy consumption information comprises at least one of energy consumption analytics information based on network element granularity or energy consumption analytics information based on slice granularity.

56. A second network element, comprising:
a sixth transceiver unit configured to transmit energy consumption information, wherein the energy consumption information comprises energy consumption information of the second network element.

57. A network element comprising: a processor and a memory having a computer program stored thereon, wherein the processor is configured to invoke and run the computer program stored in the memory to cause the network element to perform the method of any one of claims 1 to 49.

58. A terminal device comprising: a processor and a memory having a computer program stored thereon, wherein the processor is configured to invoke and run the computer program stored in the memory to cause the terminal device to perform the method of any one of claims 1 to 49.

59. An access device comprising: a processor and a memory having a computer program stored thereon, wherein the processor is configured to invoke and run the computer program stored in the memory to cause the access device to perform the method of any one of claims 1 to 49.

60. A chip comprising a processor for invoking and running a computer program from a memory to enable a device on which the chip is mounted to perform the method of any one of claims 1 to 49.

61. A computer-readable storage medium for storing a computer program that, when executed by a device, causes the device to perform the method of any one of claims 1 to 49.

62. A computer program product comprising computer program instructions that cause a computer to perform the method of any one of claims 1 to 49.

63. A computer program that causes a computer to perform the method of any one of claims 1 to 49.
